# EUROPEAN PATENT APPLICATION

(11) **EP 2 216 275 A1**
(43) Date of publication of application: **11.08.2010**
(21) Application number: 10152954.3
(22) Date of filing: 08.02.2010
(51) Int. Cl.: B65G 39/16

(54) **Self-centering device for conveyor belts**

(30) Priority: 09.02.2009 IT TO20090088
(71) Applicant: Tecnosweet S.r.l., 12051 Alba (Cuneo) (IT)
(72) Inventor: Spatolisano, Francesco, 10088, Volpiano (Torino) (IT)
(74) Representative: Buzzi, Franco

(57) **Abstract**

A self-centring device for endless-loop conveyor belts (B), comprising a resting assembly (3) for the bottom branch (L) of the belt (B), the resting assembly (3) being rotatably supported about a central vertical axis (H) and including at least one pair of idle rollers (9), which are set on opposite sides of the central vertical axis (H) and are able to turn about a common horizontal axis (8). Lateral-guide shoes (15) for the bottom branch (L) of the belt are provided, the belt being kept in contact with the idle rollers (9) in such a way as to be automatically re-aligned with its linear path when it tends to deviate.

## Description

### Field of the invention

The present invention relates in general to endless-loop conveyor belts, particularly, albeit not exclusively, designed for use in the foodstuff industry.

### State of the art

Endless-loop conveyors normally have a top, conveying, branch and a bottom, return, branch, with return rollers and drive rollers, at least one of which is motor-driven.

Particularly in the case of considerable lengths and relatively high rates of advance there arises the problem that the belt, and more in particular its top branch, is subject to swerving, which tends to deviate it from its correct linear path. Such swerving is typically detected through sensors, for example of an optical type, with the signals of which re-centring devices are actuated, which are normally constituted by fluid actuators that act directly or indirectly on the edges of the belt to bring it back into its condition of correct alignment.

Devices of this sort are relatively complicated and delicate, require frequent adjustments, and are in practice anti-economic.

### Summary of the invention

The object of the present invention is to overcome the aforesaid drawbacks and to provide a self-centring device for endless-loop conveyor belts that will avoid the use both of sensors for detection of the path of the belt and of motor-driven actuators governed by said sensors to bring the belt back into position of proper realignment.

According to the invention, the above object is achieved thanks to a self-centring device basically **characterized in that** it comprises a resting assembly for the bottom branch of the belt, the resting assembly being rotatably supported about a central vertical axis and including at least one pair of idle rollers, which are set on opposite sides of said central vertical axis and can freely rotate about a common horizontal axis, and lateral guide means for said bottom branch of the belt, which are carried by the resting assembly, means being moreover provided for keeping the bottom branch of the belt in contact with the aforesaid rollers.

The resting assembly is conveniently situated in the proximity of the front return roller of the belt, with reference to the direction of advance of its top branch.

The guide means of the belt conveniently include a pair of sliding or rolling shoes, which are located immediately upstream of the idle rollers and between which the longitudinal edges of the bottom branch of the belt move.

Thanks to this arrangement, when the belt tends to deviate from its correct linear path, the area of its bottom branch that moves into a position corresponding to the centring device according to the invention produces a rotation of the resting assembly about its central vertical axis in one direction or the other, according to whether the belt deviates in one direction or in the opposite direction. This causes, without any need for a positive command, immediate return of the belt into the position of correct centring, to which there corresponds the condition of equilibrium of the resting assembly with the axis of the rollers again directed orthogonal to the direction of advance of the belt itself. Said effect is produced continuously and in an altogether automatic way so that the belt is self-centred continuously, without any need for external commands or for sensors or detectors for detecting its proper alignment.

Obviously, in the case of particularly long belts, there may be provided two or more self-centring devices according to the invention.

### Brief description of the drawings

The invention will now be described in detail with reference to the annexed drawings, which are provided purely by way of non-limiting example and in which:
Figure 1 is a schematic view in side elevation that shows a portion of an endless-loop conveyor belt to which a self-centring device according to the invention is operatively associated;
Figure 2 is a perspective view of Figure 1;

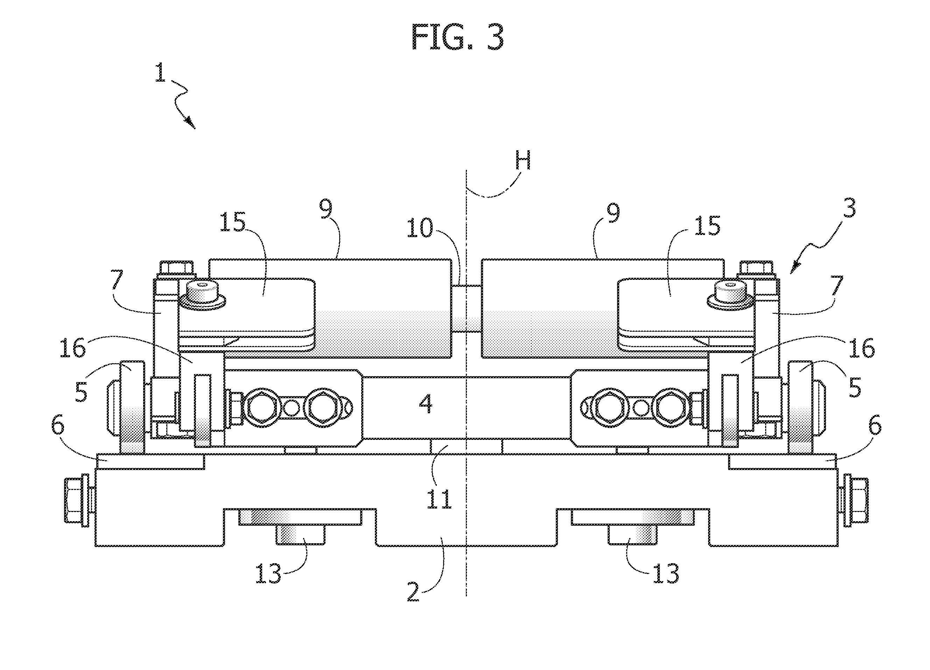

Figure 3 is a view in front elevation and at a larger scale of the self-centring device;
Figure 4 is a view in side elevation of Figure 3; and

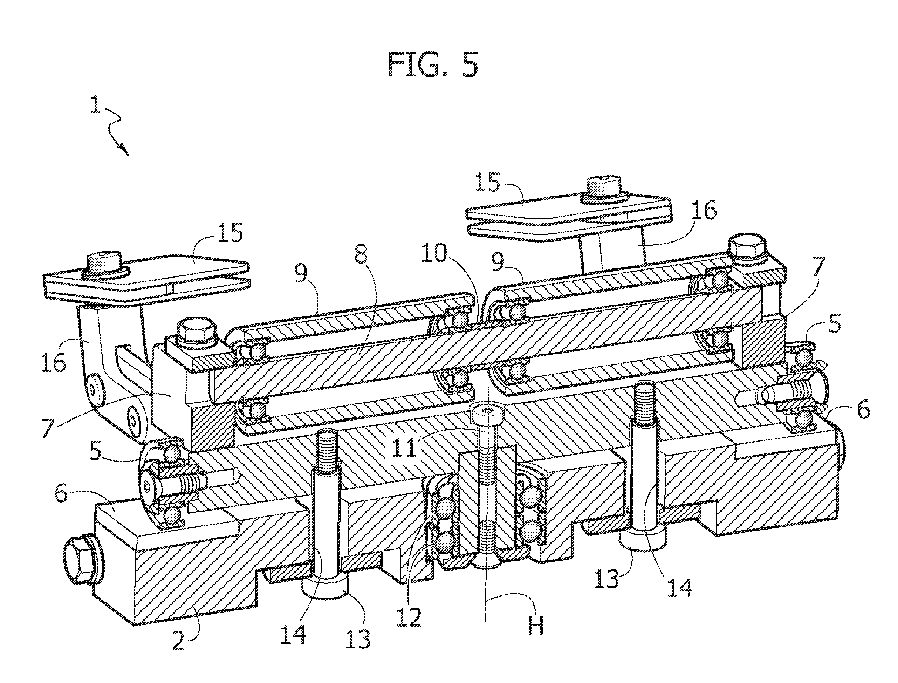

Figure 5 is a perspective and vertically sectioned view from behind of the self-centring device.

### Detailed description of the invention

With reference to the drawings, designated by B is a stretch of an endless-loop conveyor belt, the top, conveying, branch of which, mobile in the direction of the arrow F, is designated by C, and the bottom branch of which, mobile in the opposite direction G, is designated by L. In a way generally in itself known, the belt B is mobile on rollers R, at least part of which are motor-driven and of which the terminal return roller between the rear end of the bottom branch L and the front end of the top branch C of the belt B is designated by T.

Designated as a whole by 1 is a self-centring device, i.e., a device for automatic re-alignment of the belt B according to the invention.

The device 1 basically comprises a stationary base support 2 set on top of which is a resting assembly 3 for the bottom branch L of the belt B. In the case of the example illustrated, the self-centring device 1 is positioned in the vicinity of the return roller T, and more in particular just upstream of the roller R with reference to the direction of advance G of the bottom branch L.

The resting assembly 3 in turn comprises a block 4, which bears at its ends a pair of rolling bearings 5 in contact with respective pads 6 carried on top by the base support 2. Fixed on top of the end of the block 4 are two attachments 7, within which the ends of a horizontal shaft 8 are engaged, there being mounted on the horizontal shaft 8 in a freely rotatable way two idle rollers 9 separated from one another by an intermediate spacer 10. The rollers 9, the number of which could even be greater than two, are hence free to turn on the shaft 8 in a way independent of one another.

The block 4 is connected centrally to the base support 2 in a freely rotatable way, i.e., angularly floating via a central vertical pin 11, the axis of which is designated by H. In the case of the example illustrated, the pin 11 is fixed with respect to the block 4 and is able to turn with respect to the base support 2 by means rolling bearings 12.

Designated by 13 are two vertical pins, which are also fixed to the block 4, on opposite sides of the central pin 11, and guided within slots 14 of the base support 2.

With the arrangement described above, the shaft 8 that bears the two idle rollers 9 is able to turn with respect to the base support 2 about the axis H of the central vertical pin 11 in one direction or in the opposite direction, thanks to the rolling support between the bearings 5 carried by the block 4 and the pads 6 of the base support 2. The vertical pins 13 function as guide elements and also as limiters for the angular travel of the shaft 8 about the axis H.

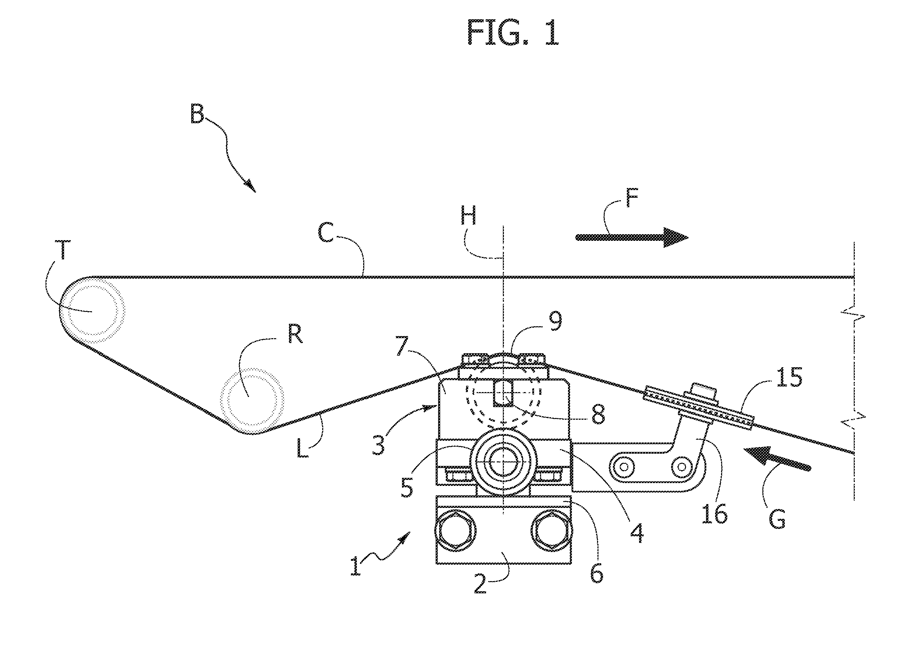

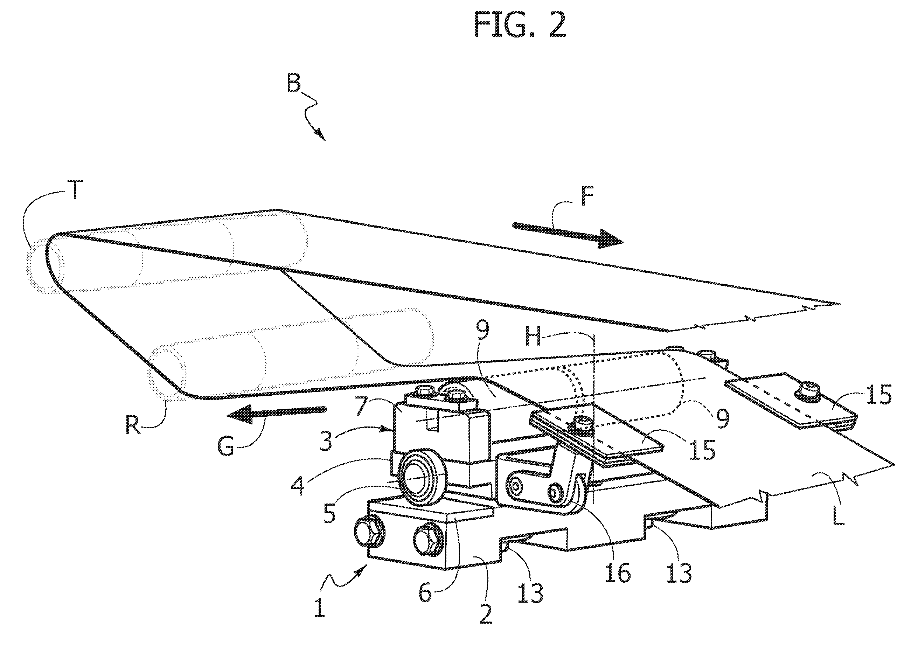

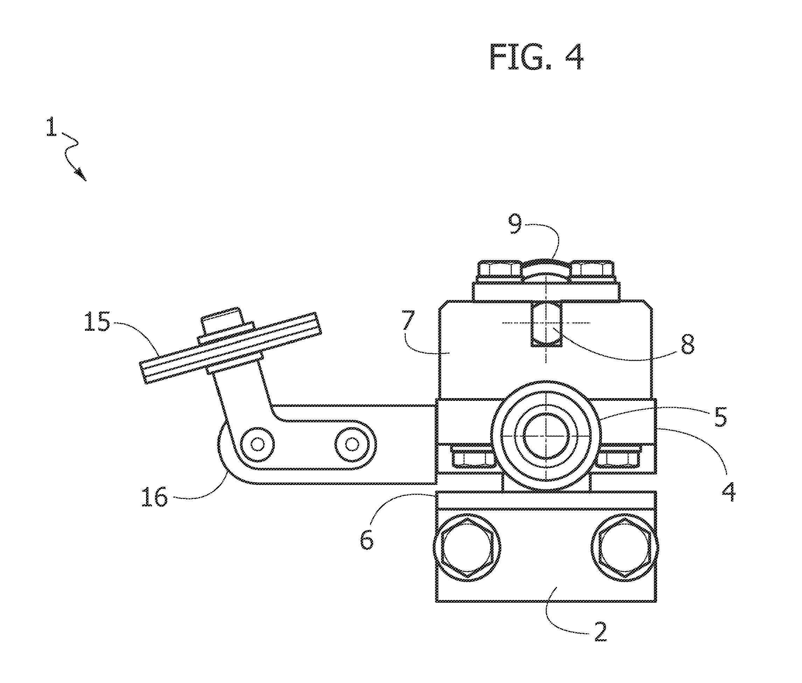

Designated by 15 are two hollow lateral-guide shoes fixed via respective brackets 16 to the block 4, immediately upstream of the rollers 9 with respect to the direction of displacement G of the bottom branch L of the belt B. The longitudinal edges of said bottom branch L are guided in a slidable way within the guide shoes 15, which, as is clearly visible in Figures 1, 2 and 4, are located at a lower level than the level of the top surfaces of the idle rollers 9 on which the bottom branch L rests. The shoes 15 are also slightly inclined so as to direct the bottom branch L on the top resting surfaces of the rollers 9, downstream of which said bottom branch L is again directed downwards via the roller R, before reaching the return roller T. In this way, the combined action of the shoes 15 and of the roller R maintains the bottom branch L in continuous contact against the surfaces of the idle rollers 9.

It should be pointed out that the shoes 15 could be replaced, in a functionally equivalent way, by rolling, instead of sliding, guide members, which co-operate with the longitudinal edges of the bottom branch L of the belt B. In addition, also the arrangement of the rolling bearings 5 could differ from the one represented: in particular, said bearings could be positioned, instead of on the outside of the block 4, within recesses internal thereto.

In operation, the bottom branch L is, as has been said, kept constantly resting against the surfaces of the idle rollers 9, upstream of which it is guided between the shoes 15.

When the bottom branch L tends to deviate with respect to its correct linear path, i.e., to swerve towards one side or towards the opposite side, the thrust exerted on one or other of the shoes 15 causes a corresponding rotation, i.e., steering of the resting assembly 3, and hence of the shaft 8 bearing the idle rollers 9, about the vertical axis H, which sets itself oblique to the branch L of the belt. Following upon said rotation, the interaction between the idle rollers 9 and the branch L of the belt B produces return of the resting assembly 3 into its condition of equilibrium, with the axis 8 of the idle rollers 9 positioned again orthogonal to the direction of advance G of the branch L of the belt B. Said self-centring action occurs in an automatic and altogether spontaneous way, and hence does not require recourse either to motor-driven actuators or to sensors for detection of the position of the belt and driving of the actuators.

From the foregoing description, it emerges clearly that the self-centring device according to the invention is particularly simple and inexpensive both as regards production and as regards assembly thereof (even in the case of already existing conveyor belts) and does not require particular interventions for maintenance or adjustment during its use.

Of course, the details of construction and the embodiments may vary widely with respect to what has been described and illustrated herein, without thereby departing from the scope of the present invention as defined in the ensuing claims. Thus for example, even though in the embodiment described with reference to the drawings the bottom branch L of the belt B is held from above against the resting assembly 3, the arrangement could be reversed and such that it rests, instead, against the resting assembly 3 from below.

## Claims

1. A self-centring device for endless-loop conveyor belts (B) with a top, conveying, branch (C), a bottom, return, branch (L), and return rollers (T), **characterized in that** it comprises a resting assembly (3) for the bottom branch (L) of the belt (B), said resting assembly (3) being rotatably supported about a central vertical axis (H) and including at least one pair of idle rollers (9), which are set on opposite sides of said central vertical axis (H) and rotate about a common horizontal axis (8), and lateral guide means (15) for said bottom branch (L), which are carried by said resting assembly (3); contrast means (15, R) being moreover provided for keeping said bottom branch (L) of the belt (B) in contact on said rollers (9).

2. The device according to Claim 1, **characterized in that** said resting assembly (3) is located in the proximity of the front return roller (T) of the belt (B) with reference to the direction of advance (F) of its top branch (C).

3. The device according to Claim 1 or Claim 2, **characterized in that** said lateral guide means include a pair of sliding or rolling shoes (15), which are located immediately upstream of said idle rollers (9) and between which the longitudinal edges of said bottom branch (L) of the belt (B) move.

4. The device according to Claim 3, **characterized in that** said shoes (15) are located at a lower level than said idle rollers (9).

5. The device according to Claim 3, **characterized in that** said contrast means for keeping said bottom branch (L) of the belt (B) in contact with said idle rollers (9) include said shoes (15) and a roller (R), which is located downstream and at a lower level than said idle rollers (9).

6. The device according to any one of the preceding claims, **characterized in that** said resting assembly (3) includes a shaft (8) for supporting in rotation said idle rollers (9), which is fixed at its ends to a block (4), which is equipped with bearings (5) that rotatably rest on a base support (2) and is connected to the base support (2) via a central pin (11) defining said vertical axis (H).

7. The device according to Claim 6, **characterized in that** moreover provided between said block (4) and said base support (2) are guide members (13), located on opposite sides of said vertical axis (H) for limiting the angular displacements of said resting assembly (3).
